# EUROPEAN PATENT SPECIFICATION

(11) **EP 3 436 293 B1**
(45) Date of publication and mention of the grant of the patent: **04.08.2021**
(21) Application number: 17716718.6
(22) Date of filing: 28.03.2017
(51) Int. Cl.: B60G 11/27, B60G 17/019

(54) **INTERNAL GAS SPRING DISPLACEMENT SENSORS AS WELL AS GAS SPRING ASSEMBLIES AND SUSPENSION SYSTEMS INCLUDING SAME**
INTERNE GASFEDERWEGSENSOREN SOWIE GASFEDERANORDNUNGEN UND AUFHÄNGUNGSSYSTEME DAMIT
CAPTEURS DE DÉPLACEMENT DE RESSORT À GAZ INTERNES ET ENSEMBLES DE RESSORT À GAZ ET SYSTÈMES DE SUSPENSION COMPRENANT CEUX-CI

(30) Priority: 28.03.2016 US 201662314369 P; 17.02.2017 US 201762460629 P
(43) Date of publication of application: 06.02.2019
(73) Proprietor: Firestone Industrial Products Company, LLC, Nashville, TN 37201 (US)
(72) Inventor: LOCKRIDGE, Larry, L., Fishers, IN 46038 (US); MBUGUA, Samuel, N., Tucson, AZ 85742 (US); CARRICO, Bryce, A., Fort Wayne, IN 46804 (US); HUNLEY, Michael, E., Fort Wayne, IN 46845 (US); COWANS, Erik, T., Fort Wayne, IN 46845 (US)
(74) Representative: Kraus & Weisert Patentanwälte PartGmbB
(86) International application number: PCT/US2017/024623
(87) International publication number: WO 2017/172831

(56) References cited:
- EP-A2- 0 313 501
- US-A1- 2012 132 788
- US-A1- 2012 132 809
- US-A1- 2013 061 666

## Description

### BACKGROUND

The subject matter of the present disclosure broadly relates to the art of spring devices and, more particularly, to internal gas spring displacement sensors operative to generate signals, data and/or other outputs having a relation to heights or distances associated with gas spring assemblies based on time-of-flight measurement of photons. Gas spring assemblies including such constructions as well as suspension systems including one or more of such gas spring assemblies are also included.

It will be appreciated that the subject displacement sensors, as well as the gas spring assemblies and suspension system that include one or more of such displacement sensors, are amenable to broad use in a wide variety of applications and environments. As examples, suitable applications and/or uses can include vehicle suspension systems, cab mounting arrangements and seat suspensions such as may exist over-the-road trucks and tractors, rail vehicles, agricultural vehicles, industrial vehicles, as well as in other machinery having moving or vibrating parts. It will be appreciated that the subject matter of the present disclosure may be particularly amenable to use in connection with motorized vehicles, and will be discussed in detail hereinafter with specific reference thereto. However, it is to be specifically understood that the subject displacement sensors, as well as the gas spring assemblies and suspension systems that include one or more of such displacement sensors, are not intended to be in any way limited to this specific example of one suitable application, which is merely exemplary.

Wheeled motor vehicles of most types and kinds include a sprung mass, such as a body or chassis, for example, and an unsprung mass, such as two or more axles or other wheel-engaging members, for example, with a suspension system disposed therebetween. Typically, such a suspension system will include a plurality of spring devices as well as a plurality of damping devices that together permit the sprung and unsprung masses of the vehicle to move in a somewhat controlled manner relative to one another. Generally, the plurality of spring elements function to accommodate forces and loads associated with the operation and use of the vehicle, and the plurality of damping devices are operative to dissipate undesired inputs and movements of the vehicle, particularly during dynamic operation thereof. Movement of the sprung and unsprung masses toward one another is normally referred to in the art as jounce motion while movement of the sprung and unsprung masses away from one another is commonly referred to in the art as rebound motion.

In some cases, the spring devices of vehicle suspension systems can be of a type and kind that are commonly referred to in the art as gas spring assemblies, which are understood to utilize pressurized gas as the working medium thereof. Typically, such gas spring assemblies include a flexible spring member that is operatively connected between comparatively rigid end members to form a spring chamber. Pressurized gas can be transferred into and/or out of the spring chamber to alter the position of the sprung and unsprung masses relative to one another and/or to provide other performance-related characteristics. Additionally, a variety of devices and/or arrangements have been and are currently used to assist in controlling the transfer of pressurized gas into and/or out of one or more spring chambers and thereby adjust the position and/or orientation of one structural component of a vehicle relative to another structural component. As one example, a mechanical linkage valve that is in fluid communication between a compressed gas source and a gas spring assembly can be interconnected between the opposing structural components. As the structural components move toward and away from one another, the valve opens and closes to permit pressurized gas to be transferred into and out of the gas spring assembly. In this manner, such mechanical linkage valves can permit control of the height of the gas spring assembly.

Unfortunately, such arrangements have a number of problems and/or disadvantages that are commonly associated with the continued use of the same. One problem with the use of mechanical linkage valves, particularly those used in association with the suspension system of a vehicle is that the linkages are frequently subjected to physical impacts, such as may be caused by debris from a roadway, for example. This can result in the linkage being significantly damaged or broken, such that the valve no longer operates properly, if the valve operates at all.

Due to the potential for known mechanical linkage valves to be damaged, regular inspection and replacement of such mechanical linkage valves is typically recommended. Another disadvantage of known mechanical linkage valves relates to the performance and operation thereof in connection with an associated suspension system. That is, known mechanical linkage valves generally open and close under predetermined height conditions regardless of the operating condition or inputs acting on the vehicle. As such, it is possible that operating conditions of the vehicle might occur during which the performance of a height change would be undesirable. Unfortunately, conventional suspension systems that utilize mechanical linkage valves are not typically capable of selective operation.

In view of the foregoing difficulties commonly associated with the use of mechanical linkage valves, height control systems for vehicle suspensions have been developed that utilize non-contact height sensors and thereby avoid the use of mechanical linkage valves. Such non-contact height sensors are commonly housed within a gas spring assembly and can utilize sound or pressure waves traveling through a fluid medium, typically at an ultrasonic frequency, to generate output signals suitable for determining the position of one structural member relative to another structural member. As an example of such an application, an ultrasonic sensor could be supported on one end member of a gas spring assembly. The ultrasonic sensor can be operative to send ultrasonic waves through the spring chamber of the gas spring assembly toward an opposing end member. The waves are reflected back by a suitable feature of the opposing end member, and the distance therebetween is determined in a conventional manner.

One advantage of such an arrangement over mechanical linkages is commonly housed within the gas spring assembly and is at least partially sheltered from impacts and exposure. However, numerous disadvantages also exist with the use of sensors that utilize ultrasonic sound waves that travel toward and are reflected back from a distant target. As one example, sound waves can be subject to interference from external sources, such as those within the gas spring assembly or in the environment around the gas spring assembly, which can degrade or otherwise diminish the performance of the height control system. What's more, environmental factors such as pressure, temperature and relative humidity alter speed with which sound will travel through the gas within the gas spring assembly. These and other factors can disadvantageously affect the accuracy and/or consistency with which height control systems can operate using known ultrasonic sensors.

EP 0 313 501 A2 discloses a gas spring assembly having a height sensor that utilizes an infrared LED transmitter in combination with a photo transistor receiver. A reflector is located a distance from the transmitter and the receiver and reflects light emitted from the transmitter back to the receiver. The amount of light reflected by the reflector is utilized to determine the distance the reflector is spaced from the transmitter and receiver.

Notwithstanding the widespread usage and overall success of conventional displacement sensors, as well as the gas spring assemblies and suspension systems including such sensors, that are known in the art, it is believed that a need exists to address the foregoing and/or other challenges while providing comparable or improved performance, ease of manufacture, reduced cost of manufacture, and/or otherwise advancing the art of gas spring devices and displacement sensors therefor.

### BRIEF SUMMARY

According to the invention, a gas spring assembly as defined in claim 1 and a corresponding suspension system as defined in claim 14 are provided.

The dependent claims define preferred and/or advantageous embodiments of the invention.

### BRIEF DESCRIPTION OF THE DRAWINGS

FIG. 1 is a schematic representation of one example of a vehicle including a suspension system with a plurality of gas spring assemblies and a plurality of displacement sensors.
FIG. 2 is a side elevation view of one example of a gas spring assembly including one example of a displacement sensor.
FIG. 3 is a cross-sectional side view of the gas spring assembly and displacement sensor in FIG. 2 taken from along line 3-3 in FIG. 2.
FIG. 4 is a cross-sectional side view of one example of a gas spring and damper assembly including another example of a displacement sensor.
FIG. 5 is an enlarged view of the portion of the gas spring and damper assembly and the displacement sensor identified as Detail 5 in FIG. 4.
FIG. 6A is a top perspective view and FIG. 6B is a bottom perspective view of one example of a displacement sensor, such as may be suitable for use as the displacement sensor illustrated in FIGS. 4 and 5.
FIG. 7 is a side elevation view of the exemplary displacement sensor shown in FIGS. 6A and 6B.
FIG. 8 is a front view of the exemplary displacement sensor shown in FIGS. 6A, 6B and 7.
FIG. 9 is a bottom plan view of the exemplary displacement sensor shown in FIGS. 6A, 6B, 7 and 8.
FIG. 10 is a schematic representation of one example of a displacement sensor in accordance with an embodiment of the invention.

### DETAILED DESCRIPTION

Turning now to the drawings, it is to be understood that the showings are for purposes of illustrating examples of the subject matter of the present disclosure and are not intended to be limiting. Additionally, it will be appreciated that the drawings are not to scale and that portions of certain features and/or elements may be exaggerated for purpose of clarity and ease of understanding.

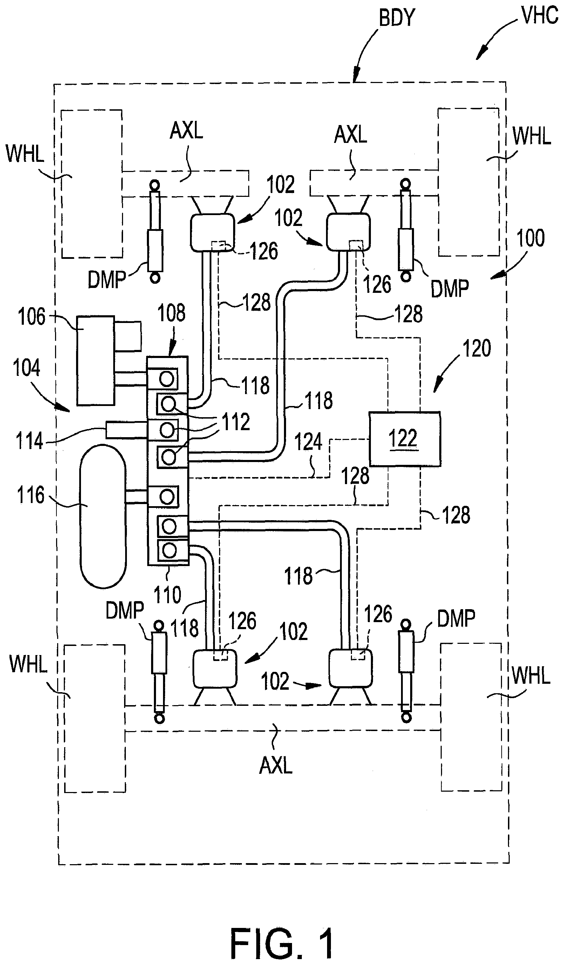

FIG. 1 illustrates one example of a suspension system **100** disposed between a sprung mass, such as an associated vehicle body **BDY,** for example, and an unsprung mass, such as an associated wheel **WHL** or an associated axle **AXL,** for example, of an associated vehicle **VHC.** It will be appreciated that any one or more of the components of the suspension system can be operatively connected between the sprung and unsprung masses of the associated vehicle in any suitable manner.

The suspension system can also include a plurality of gas spring assemblies supported between the sprung and unsprung masses of the associated vehicle. In the arrangement shown in FIG. 1, suspension system **100** includes four gas spring assemblies **102,** one of which is disposed toward each corner of the associated vehicle adjacent a corresponding wheel **WHL.** However, it will be appreciated that any other suitable number of gas spring assemblies could alternately be used in any other configuration and/or arrangement. As shown in FIG. 1, gas spring assemblies **102** are supported between axles **AXL** and body **BDY** of associated vehicle **VHC.** Additionally, it will be recognized that the gas spring assemblies shown and described in FIG. 1 (e.g., gas spring assemblies **102**) are illustrated as being of a rolling lobe-type construction. It is to be understood, however, that gas spring assemblies of other types, kinds and/or constructions could alternately be used. Depending on desired performance characteristics and/or other factors, the suspension system will typically include damping members, such as dampers **DMP,** for example, of a typical construction that are provided separately from gas spring assemblies **102** and secured between the sprung and unsprung masses in a conventional manner.

Suspension system **100** also includes a pressurized gas system **104** operatively associated with the gas spring assemblies for selectively supplying pressurized gas (e.g., air) thereto and selectively transferring pressurized gas therefrom. In the exemplary embodiment shown in FIG. 1, pressurized gas system **104** includes a pressurized gas source, such as a compressor **106,** for example, for generating pressurized air or other gases. A control device, such as a valve assembly **108,** for example, is shown as being in communication with compressor **106** and can be of any suitable configuration or arrangement. In the exemplary embodiment shown, valve assembly **108** includes a valve block **110** with a plurality of valves **112** supported thereon. Valve assembly **108** can also, optionally, include a suitable exhaust, such as a muffler **114,** for example, for venting pressurized gas from the system. Optionally, pressurized gas system **104** can also include a reservoir **116** in fluid communication with the compressor and/or valve assembly **108** and suitable for storing pressurized gas.

Valve assembly **108** is in communication with gas spring assemblies **102** through suitable gas transfer lines **118**. As such, pressurized gas can be selectively transferred into and/or out of the gas spring assemblies through valve assembly **108** by selectively operating valves **112,** such as to alter or maintain vehicle height at one or more corners of the vehicle, for example.

Suspension system **100** can also include a control system **120** that is capable of communication with any one or more systems and/or components (not shown) of vehicle **VHC** and/or suspension system **100,** such as for selective operation and/or control thereof. Control system **120** can include a controller or electronic control unit (ECU) **122** communicatively coupled with compressor **106** and/or valve assembly **108,** such as through a conductor or lead **124,** for example, for selective operation and control thereof, which can include supplying and exhausting pressurized gas to and/or from gas spring assemblies **102**. Controller **122** can be of any suitable type, kind and/or configuration.

Control system **120** can also include one or more height (or distance) sensing devices **126** (which are also referred to herein by terms such as displacement sensors and the like), such as, for example, may be operatively associated with the gas spring assemblies and capable of outputting or otherwise generating data, signals and/or other communications having a relation to a height of the gas spring assemblies or a distance between other components of the vehicle. Height sensing devices **126** can be in communication with ECU **122,** which can receive the height or distance signals therefrom. The height sensing devices can be in communication with ECU **122** in any suitable manner, such as through conductors or leads **128,** for example. In a preferred arrangement, height sensing devices **126** can be of a type, kind and/or construction that utilize time-of-flight measurement of photons to generate data, signals and/or other communications having a relation to a height of the gas spring assemblies or to a distance between other components of the vehicle.

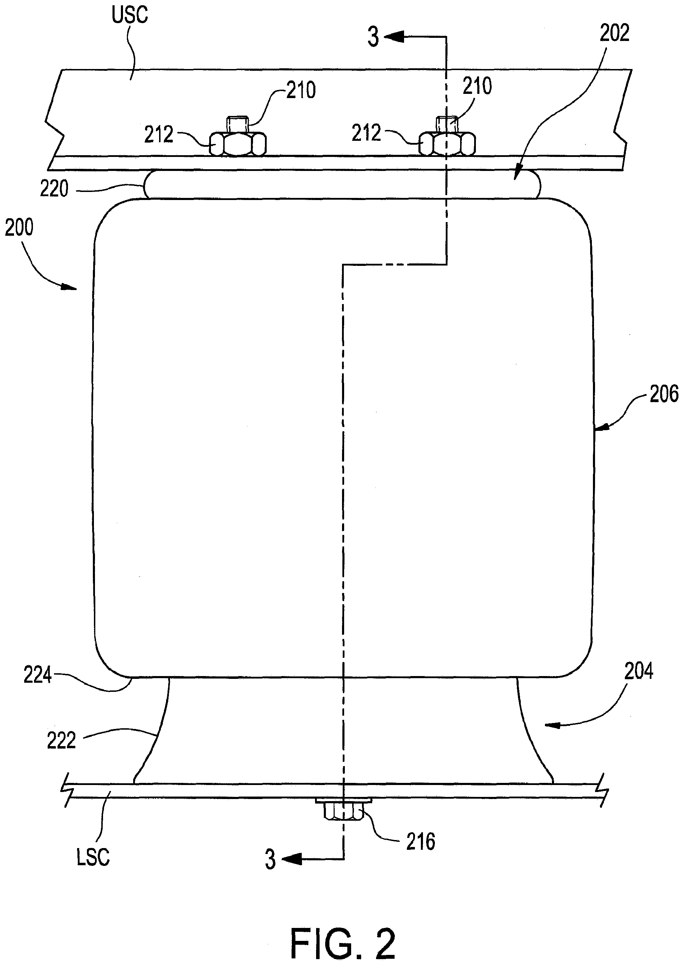

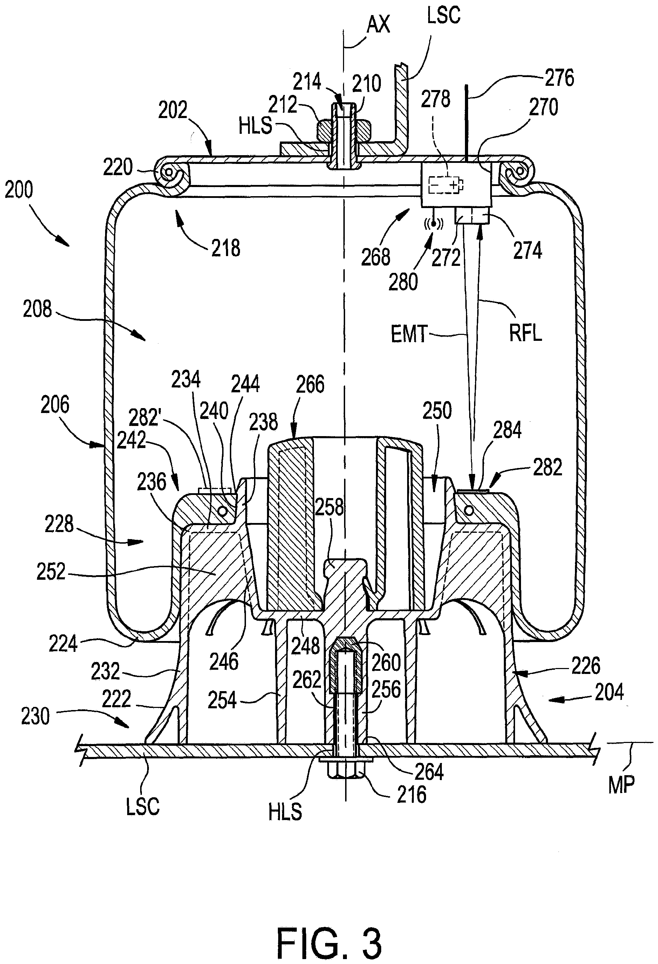

One example of a gas spring assembly **200** is shown in FIGS. 2 and 3 as having a longitudinally-extending axis **AX** (FIG. 3) and can include one or more end members, such as an end member **202** and an end member **204** that is spaced longitudinally from end member **202**. A flexible wall **206** can extend peripherally around axis **AX** and can be secured between the end members in a substantially fluid-tight manner such that a spring chamber **208** (FIG. 3) is at least partially defined therebetween.

Gas spring assembly **200** can be disposed between associated sprung and unsprung masses of an associated vehicle in any suitable manner. For example, one end member can be operatively connected to the associated sprung mass with the other end member disposed toward and operatively connected to the associated unsprung mass. In the arrangement shown in FIGS. 2 and 3, for example, end member **202** is secured along a first or upper structural component **USC,** such as associated vehicle body **BDY** in FIG. 1, for example, and can be secured thereon in any suitable manner. For example, one or more securement devices, such as mounting studs **210,** for example, can be included along end member **202**. In some cases, the one or more securement devices (e.g., mounting studs **210**) can project outwardly from end member **202** and can be secured thereon in a suitable manner, such as, for example, by way of a flowed-material joint (not shown) or a press-fit connection (not identified). Additionally, such one or more securement devices can extend through mounting holes **HLS** (FIG. 3) in upper structural component **USC** and receive one or more threaded nuts **212** or other securement devices, for example. As an alternative to one or more of mounting studs **210,** one or more threaded passages (e.g., blind passages and/or through passages) could be used in conjunction with a corresponding number of one or more threaded fasteners.

Additionally, a fluid communication port, such as a transfer passage **214** (FIG. 3), for example, can optionally be provided to permit fluid communication with spring chamber **208,** such as may be used for transferring pressurized gas into and/or out of the spring chamber, for example. In the exemplary embodiment shown, transfer passage **214** extends through at least one of mounting studs **210** and is in fluid communication with spring chamber **208**. It will be appreciated, however, that any other suitable fluid communication arrangement could alternately be used.

End member **204** can be secured along a second or lower structural component **LSC,** such as an axle **AXL** in FIG. 1, for example, in any suitable manner. As one example, lower structural component **LSC** could include one or more mounting holes **HLS** extending therethrough. In such case, a threaded fastener **216** could extend through one of mounting holes **HLS** and threadably engage end member **204** to secure the end member on or along the lower structural component.

It will be appreciated that the one or more end members can be of any suitable type, kind, construction and/or configuration, and can be operatively connected or otherwise secured to the flexible wall in any suitable manner. In the exemplary arrangement shown in FIGS. 2 and 3, for example, end member **202** is of a type commonly referred to as a bead plate and is secured to a first end **218** of flexible wall **206** using a crimped-edge connection **220**. End member **204** is shown in the exemplary arrangement in FIGS. 2 and 3 as being of a type commonly referred to as a piston (or a roll-off piston) that has an outer surface **222** that abuttingly engages flexible wall **206** such that a rolling lobe **224** is formed therealong. As gas spring assembly **200** is displaced between extended and collapsed conditions, rolling lobe **224** is displaced along outer surface **222** in a conventional manner.

As identified in FIG. 3, end member **204** includes an end member body **226** and extends from along a first or upper end **228** toward a second or lower end **230** that is spaced longitudinally from end **228**. Body **226** includes a longitudinally-extending outer side wall **232** that extends peripherally about axis **AX** and at least partially defines outer surface **222**. An end wall **234** is disposed transverse to axis **AX** and extends radially inward from along a shoulder portion **236,** which is disposed along the outer side wall toward end **228**. Body **226** also includes a first inner side wall **238** that extends longitudinally outward beyond end wall **234** and peripherally about axis **AX**. First inner side wall **238** has an outer surface **240** that is dimensioned to receive a second end **242** of flexible wall **206** such that a substantially fluid-tight seal can be formed therebetween. A retaining ridge **244** can project radially outward from along first inner side wall **238** and can extend peripherally along at least a portion thereof.

Body **226** also includes a second inner side wall **246** that extends longitudinally inward into the body from along end wall **234**. Second inner side wall **246** terminates at an end or bottom wall **248** that is approximately planar and disposed transverse to axis **AX** such that second inner side wall **246** and bottom wall **248** at least partially define a cavity **250** within body **226**. In some cases, bridge walls **252** can, optionally, extend between and operatively interconnect outer side wall **232** and second inner side wall **246**.

An inner support wall **254** is disposed radially inward from outer side wall **232** and extends peripherally about axis **AX**. In some cases, inner support wall **254** can form a hollow column-like structure that projects from along bottom wall **248** in a longitudinal direction toward end **230**. In some cases, the distal end of outer side wall **232** and/or the distal end of inner support wall **254** can at least partially define a mounting plane **MP** formed along end **230** of the end member body. In this manner, body **226** can be supported at least in part by outer side wall **232** and/or inner support wall **254,** such as on or along an associated structural member (e.g., lower structural component **LSC** in FIGS. 2 and 3). In some cases, axially applied loads or forces transmitted to bottom wall **248,** such as from impacts imparted on a jounce bumper, for example, can be reacted, communicated or otherwise at least partially transferred to the associated mounting structure by the inner support wall.

Body **226** can also include a central or support post wall **256** that is disposed radially inward from inner support wall **254** and forms a post-like structure that projects from along bottom wall **248** in a direction toward end **230.** In some cases, central wall **256** can terminate in approximate alignment with mounting plane **MP,** such as is illustrated in FIG. 3, for example.

Additionally, end member body **226** of end member **204** can include a bumper mount **258** that is disposed along bottom wall **248** and projects outwardly therefrom in an axial direction toward end **228** of the end member body. Additionally, as indicated above, end member **204** can include any number of one or more features and/or components. For example, end member **204** can include an insert **260** that is embedded (e.g., molded) into or otherwise captured and retained within end member body **226.** Insert **260** can function to assist in securing the end member on or along an associated structural component, such as providing a mounting and/or securement point for the end member. As one example, insert **260** can include a hole or opening **262** that can extend into the insert body from along an end surface **264.** In a preferred arrangement, the insert body can include a securement feature. In the arrangement shown, the securement feature can take the form of one or more helical threads that are cooperative with corresponding securement features (e.g., one or more helical threads formed on or along threaded fastener **216.**

Gas spring assembly **200** can also, optionally, include a jounce bumper **266** that can be supported within spring chamber **208,** such as to inhibit direct contact between end members **202** and **204,** for example. It will be appreciated that the jounce bumper, if included, can be supported on or along an end member in any suitable manner. For example, jounce bumper **266** is shown as being received on and retained in position on or along end member **204** by bumper mount **258.**

Gas spring assembly **200** is also shown in FIG. 3 as including a height or distance sensing device. It will be appreciated that a displacement sensor can be operatively supported within the spring chamber of the gas spring assembly in any suitable manner, and can include one or more components supported on or along either or both of end members **202** and/or **204.** For example, in the arrangement shown in FIG. 3, a displacement sensor **268** is shown as being disposed within spring chamber **208** and supported along end member **202.** Displacement sensor **268** includes a sensor housing **270** that is secured in a suitable manner to end member **202.** Displacement sensor **268** also includes a photon source **272** and a photon receptor **274.** In a preferred arrangement, such as is shown in FIG. 3, the photon source and photon receptor can be operatively disposed along a common component (e.g., one of end members **202** and **204)** and in proximal relation to one another.

Additionally, it will be appreciated that displacement sensor **268** can be connected to other systems and/or components of a vehicle suspension system in any suitable manner. For example, displacement sensor **268** could include one or more leads or conductors **276** that can be used to provide electrical power to the displacement sensor and/or for communication purposes (e.g., signals, data and/or communication transfer to and/or from the displacement sensor), such as is indicated by leads **128** of control system **120** in FIG. 1, for example. Additionally, or in the alternative, displacement sensor **268** can include a self-contained power source **278** (e.g., batteries) and/or an antenna **280** suitable for wireless reception and/or transmission of signals, data and/or information for communication and/or other purposes.

During use, displacement sensor **268** is shown in FIG. 3 as being operable to emit photons from photon source **272** in a direction toward a target feature or component for which a height or distance is to be determined, as is represented by arrow **EMT.** The emitted photons are reflected off of the target feature or component in a direction back toward photon receptor **274,** as is represented by arrow **RFL.** In many cases, a displacement sensor will operate properly while reflecting photons off of a surface of the target feature or component itself. In some cases, however, it may be desirable to separately provide a reflective target having a target surface with predetermined reflective properties, such as may be useful to provide a particular level of performance or robustness of operation.

For example, though optional, gas spring assembly **200** and/or displacement sensor **268** can include a reflective target **282** having a target surface **284** off of which photons can be reflected from photon source **272** toward photon receptor **274,** such as is shown in FIG. 3, for example. It will be appreciated that reflective target **282** and target surface **284** thereof can be of any suitable size, shape and/or configuration. For example, reflective target **282** is shown in FIG. 3 as being a spot target disposed in a desired position along end member **204** relative to displacement sensor **268**. In the alternative, a reflective target **282'** could be used that extends peripherally about axis **AX** such that an annular target surface is provided that will align with displacement sensor **268** regardless of the rotational orientation of the displacement sensor and the reflective target relative to one another about axis **AX.** Again, depending upon the anticipated conditions of use in a particular application and the desired performance characteristics and/or robustness of operation, the target surface (whether a surface of the target feature or component or a dedicated reflective surface, such as reflective surface **284**) can have a diffuse reflectance, a specular reflectance or a retroreflectance. As will be discussed in greater detail hereinafter, displacement sensor **268,** or a system or component operatively associated with the displacement sensor, can be operable to determine time of flight of photons traveling at the speed of light (i.e., 299,700,000 meters per second in air) from the photon source, to the reflective surface and then to the photon receptor. It will be appreciated that the roundtrip distance traveled by the photons will have a relation to the time of flight. Thus, by determining the time of flight of the photons, displacement sensor **268,** or a system or component operatively associated with the displacement sensor, can then determine a height or distance associated with the gas spring assembly or other components of a suspension system.

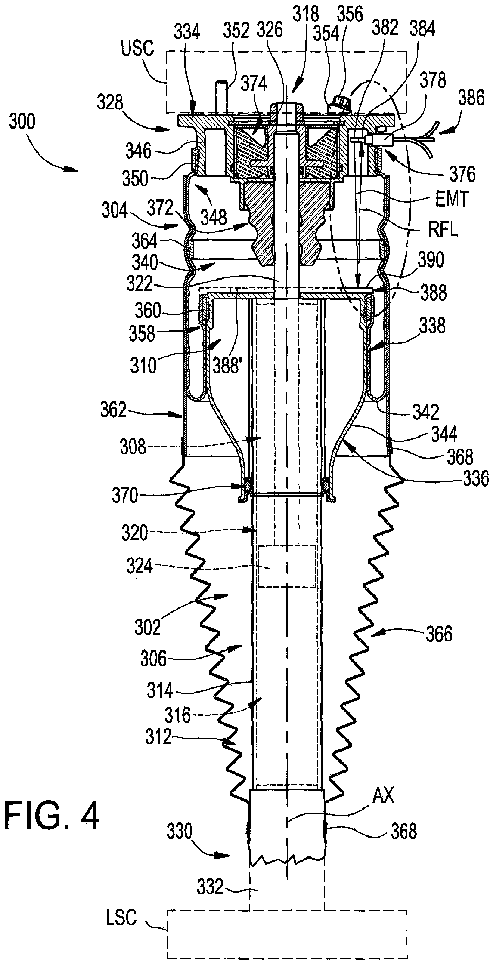

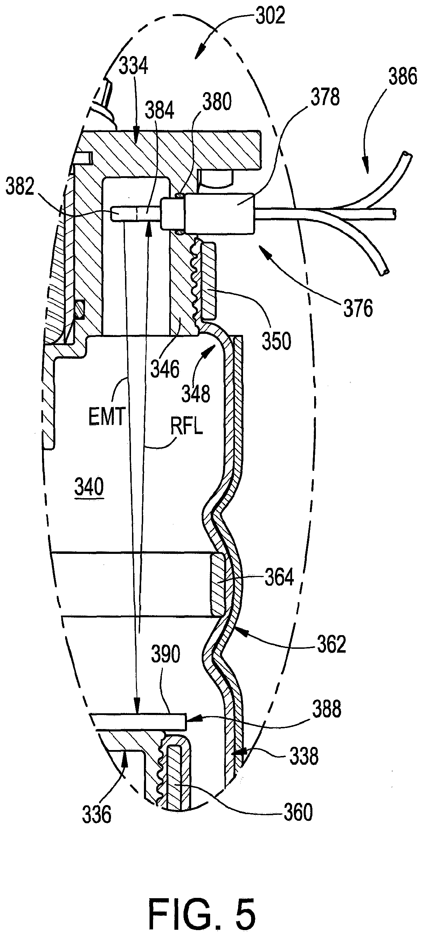

Another example of a gas spring assembly can take the form of a gas spring and damper assembly **300,** as is shown in FIGS. 4 and 5. Gas spring and damper assembly **300** can include a damper assembly **302** and a gas spring assembly **304** that is operatively connected with the damper assembly. It will be appreciated that, in some cases, gas spring and damper assembly **300** can, for example, be installed on an associated vehicle to at least partially form an associated suspension thereof. In such cases, gas spring and damper assembly **300** can undergo changes in length (i.e., can be displaced between extended and collapsed conditions) and thereby allow the components of the vehicle and the suspension system thereof to dynamically move to accommodate forces and/or inputs acting on the vehicle, such as has been described above and is well understood by those of skill in the art.

Gas spring and damper assembly **300** is shown in FIGS. 4 and 5 as having a longitudinally-extending axis **AX** with damper assembly **302** and gas spring assembly **304** operatively secured to one another around and along axis **AX**. Damper assembly **302** is shown in FIGS. 4 and 5 as extending along axis **AX** and including a damper housing **306** and a damper rod assembly **308** that is at least partially received in the damper housing. Damper housing **306** can extend axially between opposing housing ends **310** and **312,** and can include a housing wall **314** that at least partially defines a damping chamber **316**. Damper rod assembly **308** can extend lengthwise between opposing ends **318** and **320** and can include an elongated damper rod **322** and a damper piston **324** disposed along end **320** of damper rod assembly **308**. Damper piston **324** is received within damping chamber **316** of damper housing **306** for reciprocal movement along the housing wall in a conventional manner. A quantity of damping fluid (not shown) can be disposed within damping chamber and damper piston **324** can be displaced through the damping fluid to dissipate kinetic energy acting on gas spring and damper assembly **300,** again, in a conventional manner. Though damper assembly **302** is shown and described herein as having a conventional construction in which a hydraulic fluid is contained within at least a portion of damping chamber **316,** it will be recognized and appreciated that dampers of other types, kinds and/or constructions, such as pressurized gas or "air" dampers, for example, could be used without departing from the subject matter of the present disclosure.

Elongated rod **322** is shown in FIGS. 4 and 5 projecting out of damper housing **306** such that the elongated rod is outwardly exposed from the damper housing and is externally accessible with respect to the damper housing. A connection feature **326,** such as a plurality of threads, for example, can be provided on or along the elongated rod for use in operatively connecting gas spring and damper assembly **300** to an associated vehicle structure, a component of gas spring assembly **304** or another component of gas spring and damper assembly **300**.

It will be appreciated that gas spring and damper assembly **300** can be operatively connected between associated sprung and unsprung masses of an associated vehicle (or other construction) in any suitable manner. For example, one end of the assembly can be operatively connected to the associated sprung mass with the other end of the assembly disposed toward and operatively connected to the associated unsprung mass. As shown in FIGS. 4 and 5, for example, a first or upper end **328** of assembly **300** can be secured on or along a first or upper structural component **USC,** such as an associated vehicle body, for example, and can be secured thereon in any suitable manner. A second or lower end **330** of assembly **300** can be secured on or along a second or lower structural component **LSC,** such as an associated axle or suspension structure of a vehicle, for example, and can be secured thereon in any suitable manner. In some cases, damper assembly **302** can include a connection feature **332,** such as a pivot or bearing mount (not shown), for example, that is operatively disposed along damper housing **306** and is adapted for securement to lower structural component **LSC** in a suitable manner.

Gas spring assembly **304** includes an end member **334,** such as a top cap, bead plate or reservoir enclosure, for example. Gas spring assembly **304** also includes an end member **336,** such as a roll-off piston or piston assembly, for example, that is disposed in axially-spaced relation to end member **334**. A flexible spring member **338** can be operatively connected between end members **334** and **336** in a substantially fluid-tight manner such that a spring chamber **340** is at least partially defined therebetween. In some cases, flexible spring member **338** can form a rolling lobe **342** that is displaced along an outer surface **344** of end member **336** as gas spring and damper assembly **300** moves between extended (i.e., rebound) and compressed (i.e., jounce) conditions. As shown in FIGS. 4 and 5, end member **336** can include a wall portion **346** along which one end **348** of flexible spring member **338** is operatively connected, such as, for example, through the use of a retaining ring **350** that can be crimped radially inward or otherwise deformed to form a substantially fluid-tight connection therebetween.

As discussed above, gas spring and damper assembly **300** can be operatively connected between associated sprung and unsprung masses of an associated vehicle (or other structure) in any suitable manner. As shown in FIGS. 4 and 5, for example, end **328** of assembly **300** can be secured on or along upper structural component **USC** in any suitable manner. As one example, one or more securement devices, such as mounting studs **352,** for example, can be included along end member **334**. In some cases, the one or more securement devices (e.g., mounting studs **352**) can project outwardly from end member **334** and can be secured thereon in a suitable manner, such as, for example, by way of a flowed-material joint (not shown) or a press-fit connection (not identified). Additionally, such one or more securement devices can extend through mounting holes (not shown) in upper structural component **USC** and can receive one or more threaded nuts (not shown) or other securement devices, for example. Additionally, or as an alternative to one or more of mounting studs **352,** one or more threaded passages (e.g., blind passages and/or through passages) could be used in conjunction with a corresponding number of one or more threaded fasteners.

A fluid communication port can optionally be provided to permit fluid communication with spring chamber **340,** such as may be used for transferring pressurized gas into and/or out of the spring chamber, for example. It will be appreciated that such a fluid communication port can be provided in any suitable manner. As one example, a fluid communication port could extend through one or more of mounting studs 352. As another example, end member **334** can include a transfer passage **354** extending therethrough that is in fluid communication with spring chamber **340.** It will be appreciated, however, that any other suitable fluid communication arrangement could alternately be used. In some cases, passage **354** can be adapted to receive a suitable connector fitting **356,** such as may be suitable for operatively connecting gas transfer lines **118** in FIG. 1, for example, or other elements of a pressurized gas system to the gas spring and damper assembly.

An opposing end **358** of flexible sleeve **338** can be secured on or along end member **334** in any suitable manner. As one example, a portion of the flexible sleeve can be secured in abutting engagement along a wall portion of end member **334** by way of a retaining ring **360** that can be crimped radially inward or otherwise deformed to form a substantially fluid-tight connection therebetween. Additionally, gas spring and damper assembly **300** can, optionally, include an external sleeve or support, such as a restraining cylinder **362,** for example, that can be secured on or along the flexible sleeve in any suitable manner. As one example, a portion of the flexible sleeve can be secured in abutting engagement along a wall portion of restraining cylinder **362** by way of a retaining ring **364** that can be crimped radially outward or otherwise deformed to form engagement between the restraining cylinder and the flexible sleeve. It will be appreciated, however, that other arrangements could alternately be used.

Gas spring and damper assembly **300** can also, optionally, include one or more additional components and/or features. For example, an accordion-type bellows **366** can extend along at least a portion of the gas spring and damper assembly and can be secured to one or more components thereof in any suitable manner, such as by way of retaining rings **368,** for example. As another example, a seal assembly **370** can be disposed in fluid communication between damper housing **306** and end member **336,** such that a substantially fluid-tight seal can be formed therebetween. As a further example, a jounce bumper **372** can be disposed within spring chamber **340** and can be supported on or along one of end members **334** and **336** in a suitable manner. In the arrangement shown in FIGS. 4 and 5, jounce bumper **372** is received along elongated rod **322** and supported on end member **334.** It will be appreciated, however, that other configurations and/or arrangements could alternately be used. Gas spring and damper assembly **300** can also include a damper rod bushing **374** that is operatively connected between elongated rod **322** of damper assembly **302** and end member **334** of gas spring assembly **304.** In this manner, forces acting on one of damper rod **322** and end member **334** that are experienced during use of the gas spring and damper assembly are transmitted or otherwise communicated through damper rod bushing **374** to the other of damper rod **322** and end member **334.**

Gas spring assembly **304** of gas spring and damper assembly **300** is also shown in FIGS. 4 and 5 as including a height or distance sensing device. It will be appreciated that a displacement sensor can be operatively supported within the spring chamber of the gas spring assembly in any suitable manner, and can include one or more components supported on or along either or both of end members **334** and/or **336.** For example, in the arrangement shown in FIGS. 4 and 5, a displacement sensor **376** is shown as being disposed within spring chamber **340** and supported along end member 334. Displacement sensor **376** includes a sensor body or housing **378** that is secured in a suitable manner on or along end member **334.** In a preferred arrangement, end member **334** (or, alternately, end member **336**) can include a passage (not numbered) extending therethrough that is oriented transverse to axis **AX**. The passage can be dimensioned to cooperatively engage sensor body **378** such that displacement sensor **376** can be operatively secured on or along the end member. In some cases, one or more sealing elements **380** can be disposed between sensor body **378** and the end member wall portion such that a substantially fluid-tight seal can be formed and maintained therebetween. Displacement sensor **376** also includes a photon source **382** and a photon receptor **384.** In a preferred arrangement, such as is shown in FIGS. 4 and 5, for example, the photon source and photon receptor can be operatively disposed along a common component (e.g., one of end members **334** and **336**) and in proximal relation to one another.

Additionally, it will be appreciated that displacement sensor **376** can be communicatively coupled or otherwise connected to other systems and/or components of a vehicle suspension system in any suitable manner. For example, displacement sensor **376** could include one or more leads or conductors **386** that can be used to provide electrical power to the displacement sensor and/or for communication purposes (e.g., signals, data and/or communication transfer to and/or from the displacement sensor), such as is indicated by leads **128** of control system **120** in FIG. 1, for example. Additionally, or in the alternative, the displacement sensor can include a self-contained power source (e.g., batteries) and/or an antenna suitable for wireless reception and/or transmission of signals, data and/or information for communication and/or other purposes, such as has been described above in connection with power source **278** and/or antenna **280,** for example.

During use, displacement sensor **376** is shown in FIGS. 4 and 5 as being operable to emit photons from photon source **382** in a direction toward a target feature or component for which a height or distance is to be determined, as is represented by arrow **EMT.** The emitted photons are reflected off of the target feature or component in a direction back toward photon receptor **384,** as is represented by arrow **RFL.** In many cases, a displacement sensor will operate properly while reflecting photons off of a surface of the target feature or component itself. In some cases, however, it may be desirable to separately provide a reflective target having a target surface with predetermined reflective properties, such as may be useful to provide a particular level of performance or robustness of operation. For example, though optional, gas spring assembly **304** and/or displacement sensor **376** can include a reflective target **388** having a target surface **390** off of which photons can be reflected from photon source **382** toward photon receptor **384,** such as is shown in FIGS. 4 and 5, for example. It will be appreciated that reflective target **388** and target surface **390** thereof can be of any suitable size, shape and/or configuration. For example, reflective target **388** is shown in FIGS. 4 and 5 as being a spot target disposed in a desired position along end member **336** relative to displacement sensor **376.** In the alternative, a reflective target **388'** could be used that extends peripherally about axis **AX** such that an annular target surface is provided that will align with displacement sensor **376** regardless of the rotational orientation of the displacement sensor and the reflective target relative to one another about axis **AX.**

Again, depending upon the anticipated conditions of use in a particular application and the desired performance characteristics and/or robustness of operation, the target surface (whether a surface of the target feature or component or a dedicated reflective surface, such as reflective surface **390**) can have a diffuse reflectance, a specular reflectance or a retroreflectance. As will be discussed in greater detail hereinafter, displacement sensor **376,** or a system or component operatively associated with the displacement sensor, can be operable to determine time of flight of photons traveling at the speed of light (i.e., 299,700,000 meters per second in air) from the photon source, to the reflective surface and then to the photon receptor. It will be appreciated that the roundtrip distance traveled by the photons will have a relation to the time of flight. Thus, by determining the time of flight of the photons, displacement sensor **376,** or a system or component operatively associated with the displacement sensor, can then determine a height or distance associated with the gas spring assembly or other components of a suspension system.

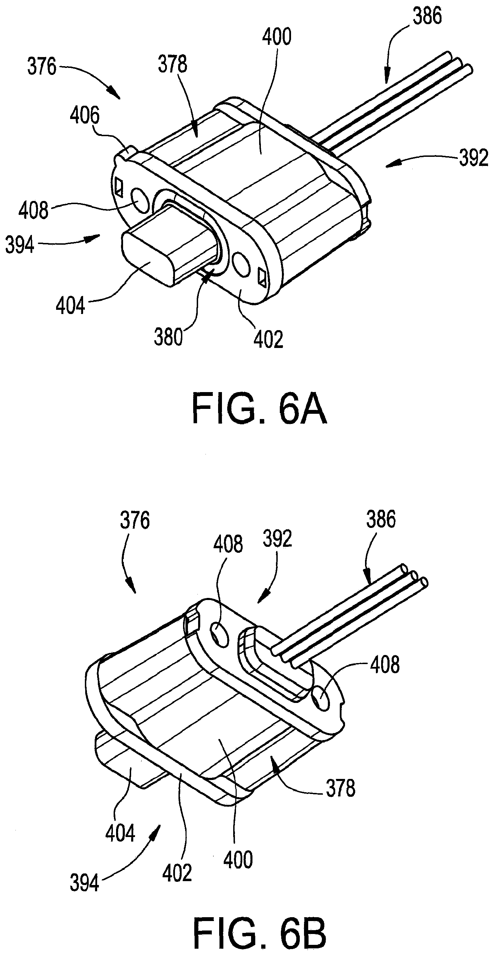

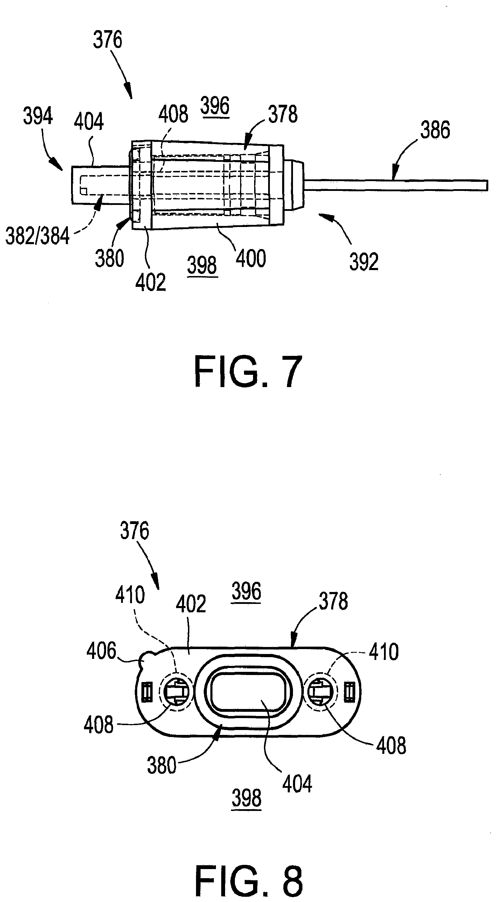

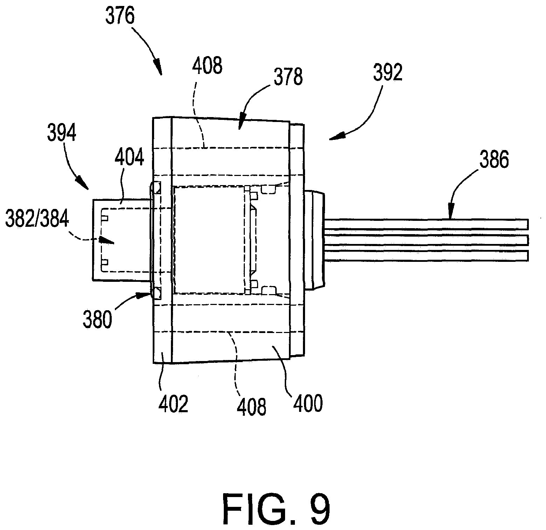

FIGS. 6A, 6B and 7-9 illustrate displacement sensor **376** and sensor body **378** in greater detail. It will be appreciated that sensor body **378** can include any suitable number of one or more walls and/or wall portions. For example, sensor body **378** extends lengthwise from an end **392** to an end **394** and has a top **396** and a bottom **398.** Sensor body **378** is shown as including a body wall portion **400** disposed toward end **392** and a mounting wall portion **402** disposed along body wall portion **400** toward end **394**. Sensor body **378** also includes a sensing wall portion **404** that projects outwardly from along mounting wall portion **394** in a direction opposite body wall portion **400**.

In the configuration shown in FIGS. 2 and 3 as well as in FIGS. 4, 5, 6A, 6B and 7-9, the displacement sensor is oriented such that the photon source emits photons in the direction of a predetermined target surface. As such, it will be appreciated that sensor **126, 268** and/or **376** can, in some cases, include one or more features operable to orient or otherwise ensure that the sensor is installed in the desired orientation. As one example, sensor body **378** can include one or more indexing features **406** disposed on or along mounting wall portion **402**. In a preferred arrangement, indexing feature **406** is dimensioned to cooperatively engage a corresponding indexing feature on or along the associated end member. In the arrangement shown in FIGS. 6A, 6B and 7-9, indexing feature **406** is in the form of a projection extending outwardly from along mounting wall portion **402**. In such case, the corresponding securement feature of the associated end member could take the form of a groove or slot dimensioned to at least partially receive indexing feature **406**. It will be appreciated, however, that other configurations and/or arrangements could alternately be used.

Additionally, it will be appreciated that displacement sensor **376** can be secured on or along the associated end member (e.g., one of end members **334** and **336**) in any suitable manner. As one example, sensor body **378** can include one or more mounting holes **408,** such as may be suitable for receiving securement devices (not shown) dimensioned to cooperatively engage the associated end member to attach or otherwise secure the displacement sensor thereon. In a preferred arrangement, sensor body **378** can include one or more compression limiting features, such as compression limiting cylinders **410,** for example, that are operative to substantially inhibit inadvertent deflection and/or deformation of sensor body **378** and/or other components of displacement sensor **376,** such as might otherwise occur during installation, for example.

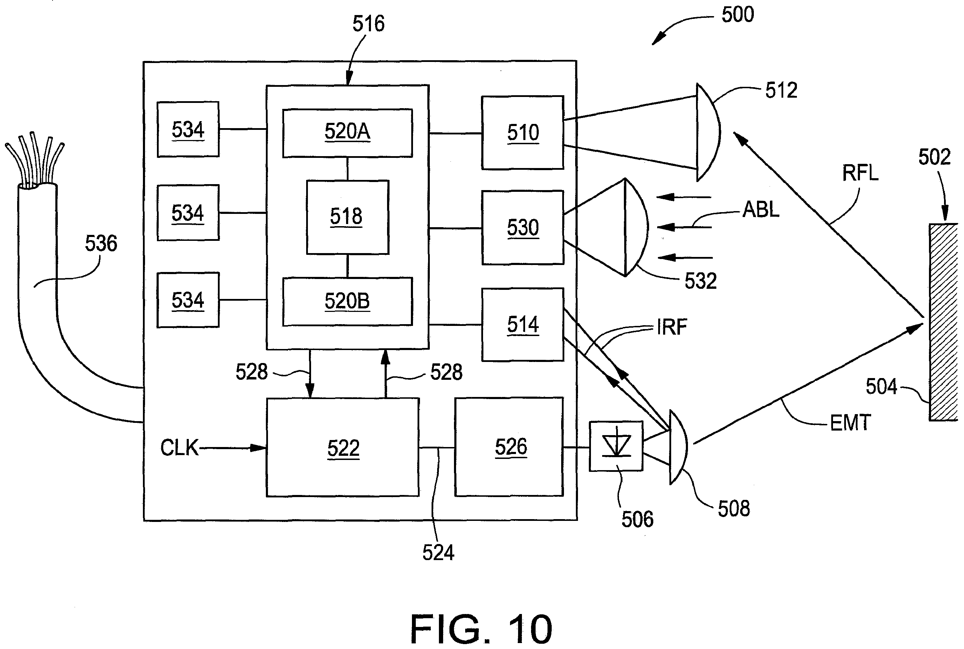

FIG. 10 schematically illustrates one example of a displacement sensor **500** in accordance with an embodiment of the invention, such as may be suitable for use as one or more of sensors **126, 268** and **376,** for example. As discussed above, sensor **500** is preferably of a type, kind and/or construction that utilize time-of-flight measurement of photons to generate data, signals and/or other communications having a relation to a height of the gas spring assemblies or to a distance between other components of an associated vehicle or other structure. In FIG. 10, a predetermined target **502** having a target surface **504** is disposed in spaced relation to displacement sensor **500** such that a distance therebetween can be determined by the displacement sensor in accordance with the subject matter of the present disclosure.

Sensor **500** includes a photon source **506** that is operable to emit photons through a lens **508** toward target surface **504,** as is represented in FIG. 10 by arrow **EMT.** Displacement sensor **500** also includes a photon receptor **510** that is operable sense or otherwise detect the presence of photons received through lens **512.** Displacement sensor **500** can also include a reference photon detector **514** that is operable to sense or otherwise detect the presence of photons received by way of a reflection of emitted photons that is internal to the displacement sensor, as is represented in FIG. 10 by arrows **IRF.** The displacement sensor also includes a delay detector **516** that is operable to determine a time difference between the emission of photons from photon source **506** and the detection of emitted photons at photon receptor **510.** Due to the travel of photons at the speed of light (through air at 299,700,000 meters per second), the time taken to travel from the photon source, to the target reflector and return to the photon detector is extremely small. However, such a time difference is measurable.

Delay detector **516** can be constructed or otherwise provided in any suitable manner. As one example, a delay detection circuit could be used, such as is described in detail in U.S. Patent Publication No. 2016/0291316, which was published on October 6, 2016 in the names of STMicroelectronics Limited of Marlow Bucks, Great Britain and STMicroelectronics SAS of Grenoble, France, and entitled OPTICAL SIGNAL GENERATION IN A SPAD ARRAY. Alternately, the delay detector could include a combination of hardware, firmware and/or software operable to determine a time difference between the emission of photons from photon source **506** and the detection of emitted photons at photon receptor **510.** For example, displacement sensor **500** is shown in FIG. 10 as including a controller or processing device **518,** which can be of any suitable type, kind and/or configuration, such as a microprocessor, for example, for processing data, executing software routines/programs, and other functions relating to at least the determination of a time difference between the emission of photons from photon source **506** and the detection of emitted photons at photon receptor **510.**

Additionally, displacement sensor **500** can include a non-transitory storage device or memory, which can be of any suitable type, kind and/or configuration that can be used to store data, values, settings, parameters, inputs, software, algorithms, routines, programs and/or other information or content for any associated use or function, such as use in association with the determination of a time difference between the emission of photons from photon source **506** and the detection of emitted photons at photon receptor **510** and/or with the performance and/or operation of the displacement sensor **500** as well as any systems, components and/or features of the gas spring assemblies and/or suspension system with which the displacement sensor may be operatively associated.

As such, displacement sensor **500** can include a non-transitory storage device or memory, which is represented in FIG. 10 by boxes **520A** and **520B,** that is suitable for data, values, settings, parameters, inputs, software, algorithms, routines, programs and/or other information or content for any associated use or function. Non-transitory memory stores **520A** and **520B** are communicatively coupled with processing device **518** such that the processing device can access the memory stores to retrieve and execute any one or more software programs and/or routines. Additionally, data, values, settings, parameters, inputs, software, algorithms, routines, programs and/or other information or content can also be retained within memory **520A** and **520B** for retrieval by processing device **518.** It will be appreciated that such software routines can be individually executable routines or portions of a software program, such as an operating system, for example. Additionally, it will be appreciated that the control system, including any controller, processing device and/or memory, can take any suitable form, configuration and/or arrangement, and that the embodiments shown and described herein are merely exemplary. Furthermore, it is to be understood, however, that the modules described above in detail can be implemented in any suitable manner, including, without limitation, software implementations, hardware implementations or any combination thereof.

Displacement sensor **500** can also include any other components, circuits, data, values, settings, parameters, inputs, software, algorithms, routines, programs and/or other information or content for operation and use of the displacement sensor. For example, displacement sensor **500** can include a frequency generator **522** that can be implemented as any combination of circuitry and software. A clock signal **CLK** can be provided to frequency generator **522,** which can generate a voltage signal **524** that is provided to a driver **526** for generating a signal for driving photon source **506.** Delay detector **516** can also be operative to generate and communicate phase control signals **528** to frequency generator **522,** such as is described in detail in U.S. Patent Publication No. 2016/0291316 discussed above.

Displacement sensor **500** can further include an ambient light sensor **530** that is operable to detect a level of ambient light in a surrounding environment through lens **532,** such as is represented by arrows **ABL** in FIG. 10, for example. Processing device **518** and memory stores **520A** and **520B** are preferably configured to detect and measure ambient light conditions through operation of ambient light sensor **530.** In some cases, displacement sensor **500** can also include one or more additional sensors and/or other components, such as are represented by boxes **534** in FIG. 10, which are communicatively coupled to processing device **518** and memory stores **520A** and **520B.** As non-limiting examples, boxes **534** can represent temperature sensors, pressure sensors, accelerometers and/or inertial measurement units. In some cases, displacement sensor **500** can be contained in a sensor body or housing **536,** such as has been discussed above in detail for example in connection with other embodiments. Additionally, displacement sensor **500** can be communicatively coupled with other systems and/or components (e.g., controller **122** in FIG. 1) in any suitable manner. For example, the displacement sensor can include one or more leads or conductors **538** that are communicatively coupled with one or more components of the displacement sensor.

Using such an arrangement, displacement sensor **500** can function as an extremely accurate ride height sensor that is capable of providing signals, data and/or other information regarding an average relative distance between gas spring end members and/or other components of a vehicle or other structure. Advantageously, displacement sensor **500** can accomplish these and other functions from the enclosed environment of the interior of a gas spring assembly (e.g., gas spring assemblies **102, 200** and **304**), thereby isolating the displacement sensor and any reflector target, if provided, from the deleterious effects of environments to which vehicle suspension systems are commonly exposed.

It will be appreciated that photon source **506** can take the form of any suitable type and/or kind of device. As one example, photon source **506** can include a laser diode. In a preferred arrangement, the laser diode can take the form of a vertical-cavity surface-emitting laser (VCSEL). It will be appreciated that photon source **506** can emit photons having any suitable wavelength, such as a wavelength in a range of from approximately six hundred fifty (650) nanometers to approximately two thousand (2000) nanometers, for example. Additionally, it will be appreciated that photon receptor **510** and reference photon detector **514** can be of any suitable type, kind and/or construction. In a preferred construction, photon receptor **510** and reference photon detector **514** can include single-photon avalanche diode (SPAD) arrays, such as are described in U.S. Patent Publication No. 2016/0291316 discussed above.

As discussed above, the subject matter of the present disclosure can include an integrated circuit that measures instantaneous, absolute displacement based measurements using the time of flight of emitted photons. Such a construction will allow absolute distance measurement independent of target reflectance by precisely measuring the time the light takes to travel to the target reflector. Displacement sensors in accordance with the subject matter of the present disclosure can operate within a range of from approximately zero (0) centimeters to approximately twenty (20) centimeters, with one hundred (100) centimeter ranging being possible using specific reflected target material.

It has been determined that ambient light conditions within a gas spring assembly can be as low as 0.5 lumens. As such, a displacement sensor in accordance with the subject matter of the present disclosure is preferably designed to function properly under ambient light conditions within a range of from approximately zero (0) lumens to full sunlight. Additionally, as it concerns target reflectors and the reflectance of target surfaces, it will be appreciated that any one of various reflector surfaces can be used. In some cases, a natural or untreated surface of an existing component having a reflectance of as low as three (3) percent could be used. In other cases, reflector surfaces can be utilized that provide improved accuracy and/or robustness of operation, such as accuracy resolution for the displacement of less than one (1) millimeter can be used. Such an internal height sensor can be powered by a 5V voltage regulated and coupled source, with an adjustable digital output rate, such as a 16-bit digital output rate, for example, of the signal with an adjustable sample rate, such as ten (10) averaged samples. An intended operation range of this internal height sensor can be within a temperature range of approximately -40°C to approximately 85°C.

In some cases, details and/or specifications such as those described below can correspond to additional operating parameters and/or performance characteristics of a displacement sensor in accordance with the subject matter presented in this application. For example, in some cases an absolute accuracy within a range of +/- 4 millimeters can be used with a range of +/- 1 millimeter being achieved under certain conditions of use. As another example, in some cases a relative accuracy within a range of +/- 2 millimeter can be used. As a further example, in some cases a sampling period of approximately 10 milliseconds can be used in which case the displacement sensor can report a new height or distance measurement every 10 milliseconds.

In order to meet the difficult environmental requirements associated with certain applications and/or conditions of use, a displacement sensor assembly in accordance with the subject matter of the present disclosure can include one or more of an injection molded housing and an over-molded housing of the sensor's circuitry. In the case of injection molded housings, a single-piece clear polymeric (e.g., polycarbonate) part can be used where the printed circuit board was populated, then inserted into the housing. A potting compound can be shot into the housing to seal the unit. The housing can have a gasket on the end nearest to the optics sensor that prevents the potting compound from entering that part of the housing and to aid against corrupting the optics and thereby creating an air cavity around the optics.

With regard to the over-molded housings, a new process was developed since a standard over-molding process would likely damage the sensitive electronic and optical parts via the application of high pressure and high temperature. To overcome this challenge, a low pressure over-molding solution that also used temperatures low enough to prevent damage to the PCB and other components. These parts have shown excellent precision unit to unit since any variances in the over-molded material (e.g., acrylic) can be controlled.

As an alternative, a combination of the two foregoing methods of forming a displacement sensor body or housing could be used. In such a method of manufacture, an injection molded polycarbonate housing could be formed. Such an injection molded polycarbonate housing will form a hard enclosure that will withstand environmental conditions and satisfy performance requirements for robustly protecting any sensitive internal components of the displacement sensor. Examples of such environmental conditions and performance requirements that an injection molded polycarbonate housing can provide include pressure, temperature, impact, vibration, chemical resistance and infrared transparency. As discussed above, the displacement sensor body can include one or more sealing elements to form a substantially fluid-tight seal with the end member of the gas spring assembly.

A printed circuit board assembly (PCBA) with wires attached can then be over-molded and inserted in to the injection molded polycarbonate housing and sealed with an end cap. The over-molded material can serve as a strain relief for the wires. The over-molded material can also seal the wires to the polycarbonate housing, and fill the interior of the housing with over-molded material to reduce the internal air volume of the assembled displacement sensor. This advantageously reduces amount of moisture that can be present inside the displacement sensor to potentially condense therein. Two or more of the components can be mechanically secured together using molded-in interlocking features.

This development of a process of the packaging a time of flight internal height sensor in accordance with the subject matter of the present disclosure is beneficial since various characteristics and/or features of the packaging material, such as the optical clarity, the distance between the time of flight sensor and the material used, for example, can have a direct effect on the successful operation of the sensor.

In some cases, temperature compensation can be included that will permit an output of a time of flight sensor (e.g., displacement sensor **500**) to be variable over different temperature ranges. In some cases, such adjustments can include compensating any data from the sensor via a compensation algorithm. This algorithm may be derived from taking distance/displacement data from multiple distances on multiple sensors over the entire operation temperature range (-40°C to 85°C). The temperature compensation algorithm, as part of the operational software for this internal height sensor as utilized can, in some cases, contribute to the successful operation of the present invention. In some cases, such a temperature compensation algorithm can be stored in memory stores **520A** and **520B** and executed by processing device **518.**

It is a possibility that as the displacement range increases, the linearity of the sensor is affected in that non-linearity is evident as different ranges. For that reason, it may be desirable to include a range compensation algorithm to ensure that the displacement readings are linear throughout the range. For example, it may be found that the internal height sensors are sensing a displacement of 300 millimeters while the actual displacement is 310 millimeters. Under such conditions of use, a compensation algorithm could be used that is capable of automatically correcting this difference across the entire range of detection. In some cases, such a linearity compensation algorithm can be stored in memory stores **520A** and **520B** and executed by processing device **518.**

As described above in detail, the subject matter of the present disclosure can utilize a proximity and ambient light sensing module that is capable of performing time of flight based displacement measurements of emitted photons. Such sensing modules can include one or more devices that can utilize an infrared transmitter, a range sensor, and an ambient light sensor in one package. One example of such a construction is available from STMicroelectronics of Geneva, Switzerland under the component designation VL6180X and commercially referred to as a FLIGHTSENSE™ module. It will be appreciated, however, that other devices could alternately be used.

As used herein with reference to certain features, elements, components and/or structures, numerical ordinals (e.g., first, second, third, fourth, etc.) may be used to denote different singles of a plurality or otherwise identify certain features, elements, components and/or structures, and do not imply any order or sequence unless specifically defined by the claim language. Additionally, the terms "transverse," and the like, are to be broadly interpreted. As such, the terms "transverse," and the like, can include a wide range of relative angular orientations that include, but are not limited to, an approximately perpendicular angular orientation. Also, the terms "circumferential," "circumferentially," and the like, are to be broadly interpreted and can include, but are not limited to circular shapes and/or configurations. In this regard, the terms "circumferential," "circumferentially," and the like, can be synonymous with terms such as "peripheral," "peripherally," and the like.

Furthermore, the phrase "flowed-material joint" and the like, if used herein, are to be interpreted to include any joint or connection in which a liquid or otherwise flowable material (e.g., a melted metal or combination of melted metals) is deposited or otherwise presented between adjacent component parts and operative to form a fixed and substantially fluid-tight connection therebetween. Examples of processes that can be used to form such a flowed-material joint include, without limitation, welding processes, brazing processes and soldering processes. In such cases, one or more metal materials and/or alloys can be used to form such a flowed-material joint, in addition to any material from the component parts themselves. Another example of a process that can be used to form a flowed-material joint includes applying, depositing or otherwise presenting an adhesive between adjacent component parts that is operative to form a fixed and substantially fluid-tight connection therebetween. In such case, it will be appreciated that any suitable adhesive material or combination of materials can be used, such as one-part and/or two-part epoxies, for example.

Further still, the term "gas" is used herein to broadly refer to any gaseous or vaporous fluid. Most commonly, air is used as the working medium of gas spring devices, such as those described herein, as well as suspension systems and other components thereof. However, it will be understood that any suitable gaseous fluid could alternately be used.

It will be recognized that numerous different features and/or components are presented in the embodiments shown and described herein, and that no one embodiment may be specifically shown and described as including all such features and components. As such, it is to be understood that the subject matter of the present disclosure is intended to encompass any and all combinations of the different features and components that are shown and described herein, and, without limitation, that any suitable arrangement of features and components, in any combination, can be used. Thus it is to be distinctly understood claims directed to any such combination of features and/or components, whether or not specifically embodied herein, are intended to find support in the present disclosure.

Thus, while the subject matter of the present disclosure has been described with reference to the foregoing embodiments and considerable emphasis has been placed herein on the structures and structural interrelationships between the component parts of the embodiments disclosed, it will be appreciated that other embodiments can be made and that many changes can be made in the embodiments illustrated and described without departing from the principles of the invention as defined in the accompanying claims. Obviously, modifications and alterations will occur to others upon reading and understanding the preceding detailed description. Accordingly, it is to be distinctly understood that the foregoing descriptive matter is to be interpreted merely as illustrative of the subject matter of the present disclosure and not as a limitation.

## Claims

1. A gas spring assembly (102;200;304) having a longitudinal axis (AX), said gas spring assembly (102;200;304) comprising:
a flexible spring member (206;338) including a flexible wall extending peripherally about said longitudinal axis (AX) and axially between opposing first and second ends (218;348,228;358) of said flexible spring member (206;338) to at least partially define a spring chamber (208;340) therebetween;
a first end member (202;334) secured along said first end (218;348) of said flexible spring member (206;338) such that a substantially fluid-tight seal is formed therebetween;
a second end member (204;336) disposed in axially-spaced relation to said first end member (202;334), said second end member (204;336) secured along said second end (228;358) of said flexible spring member (206;338) such that a substantially fluid-tight seal is formed therebetween;
a photon source (272;382;506) including a laser diode, said photon source (272;382;506) operatively disposed along one of said first end member (202;334) and said second end member (204;336);
a target surface (284;390;504) operatively disposed along the other of said first end member (202;334) and said second end member (204;336);
a photon receptor (274;384;510) operatively disposed along said one of said first end member (202;334) and said second end member (204;336) relative to said target surface (284;390;504);
a reference photon detector (514) operable to sense photons received by way of an internal reflection (IRF); and,
a processor (518) communicatively coupled with said photon source (272;382;506) and said photon receptor (274;384;510);
said photon source (272;382;506) operable to direct photons toward (EMT) said target surface (284;390;504) through at least a portion of said spring chamber (208;340), said photon receptor (274;384;510) operable to generate a signal upon receiving photons reflected off (RFL) said target surface (284;390;504) from said photon source (272;382;506), and said processor (518) operable to determine a distance having a relationship to a time of flight of photons reflected off (RFL) of said target surface (284;390;504) from said photon source (272;382;506) and received at said photon receptor (274;384;510).

2. A gas spring assembly (102;200;304) according to claim 1 further comprising a lens (508) optically coupled with said photon source (272;382;506) and through which emitted photons (EMT) are directed toward said target surface (284;390;504).

3. A gas spring assembly (102;200;304) according to either one of claims 1 and 2, wherein said laser diode is in the form of a vertical-cavity surface-emitting laser.

4. A gas spring assembly (102;200;304) according to any one of claims 1-3, wherein said photon source (272;382;506) emits photons (EMT) having a wavelength within a range of from approximately 650 nm to approximately 2000 nm.

5. A gas spring assembly (102;200;304) according to any one of claims 1-4, wherein said photon receptor (274;384;510) includes a single-photon avalanche diode (SPAD) array.

6. A gas spring assembly (102;200;304) according to any one of claims 1-5, wherein said target surface (284;390;504) has a reflectance as low as approximately three (3) percent.

7. A gas spring assembly (102;200;304) according to any one of claims 1-6, wherein said target surface (284;390;504) is at least partially formed by a material having a reflectance of at least thirty (30) percent.

8. A gas spring assembly (102;200;304) according to any one of claims 1-7, wherein said target surface (284;390;504) is at least partially formed by a material having one of diffuse reflectance, specular reflectance and retroreflectance.

9. A gas spring assembly (102;200;304) according to any one of claims 1-8 further comprising a sensor assembly (126;268;376;500) supported on one of said first end member (202;334) and said second end member (204;336), said sensor assembly (126;268;376;500) including said photon source (272;382;506) and said photon receptor (274;384;510).

10. A gas spring assembly (102;200;304) according to claim 9, wherein said sensor assembly (126;268;376;500) includes an ambient light sensor (530) communicatively coupled with at least one of said photon source (272;382;506) and said photon receptor (274;384;510).

11. A gas spring assembly (102;200;304) according to any one of claims 1-10, wherein said target surface (284;390;504) is oriented transverse to said longitudinal axis (AX) and supported along said first end member (202;334), and said photon source (272;382;506) and said photon receptor (274;384;510) are supported along said second end member (204;336) such that photons are emitted (EMT) and reflected (RFL) in an approximately longitudinal direction.

12. A gas spring assembly (102;200;304) according to claim 11 wherein said first end member (334) includes an end member wall (346) with a passage extending therethrough that is oriented transverse to said longitudinal axis (AX), and said sensor assembly (376) extends into fluid communication with said spring chamber (340) through said passage.

13. A gas spring assembly (102;200;304) according to claim 12 further comprising a sealing element (380) fluidically disposed between said end member wall (346) and said sensor assembly (376) such that a substantially fluid-tight seal is formed therebetween.

14. A suspension system (100) comprising:
a pressurized gas system (104) including a pressurized gas source (106;116) and a control device (108); and,
at least one gas spring assembly (102;200;304) according to any one of claims 1-13 disposed in fluid communication with said pressurized gas source (106; 116) through said control device (110) such that pressurized gas can be selectively transferred into and out of at least said spring chamber (208;340).

15. A gas spring and damper assembly (300) comprising:
a damper assembly (302); and,
a gas spring assembly (102;200;304) according to any one of claims 1-13 operatively connected to said damper assembly (302).

## Patentansprüche

1. Gasfederanordnung (102; 200; 304) mit einer Längsachse (AX), wobei die Gasfederanordnung (102; 200; 304) umfasst:
ein flexibles Federelement (206; 338) einschließlich einer flexiblen Wand, die sich peripher um die Längsachse (AX) und axial zwischen gegenüberliegenden ersten und zweiten Enden (218; 348, 228; 358) des flexiblen Federelements (206; 338) erstreckt, um mindestens teilweise eine Federkammer (208; 340) dazwischen zu definieren;
ein erstes Endelement (202; 334), das entlang des ersten Endes (218; 348) des flexiblen Federelements (206; 338) befestigt ist, sodass eine im Wesentlichen fluiddichte Abdichtung dazwischen gebildet ist;
ein zweites Endelement (204; 336), das in axial beabstandeter Beziehung zu dem ersten Endelement (202; 334) angeordnet ist, wobei das zweite Endelement (204; 336) entlang des zweiten Endes (228; 358) des flexiblen Federelements (206; 338) befestigt ist, sodass eine im Wesentlichen fluiddichte Abdichtung dazwischen gebildet ist,
eine Photonenquelle (272; 382; 506) einschließlich einer Laserdiode, wobei die Photonenquelle (272; 382; 506) betriebsfähig entlang eines von dem ersten Endelement (202; 334) und dem zweiten Endelement (204; 336) angeordnet ist;
eine Zieloberfläche (284; 390; 504), die betriebsfähig entlang des anderen von dem ersten Endelement (202; 334) und dem zweiten Endelement (204; 336) angeordnet ist;
einen Photonenrezeptor (274; 384; 510), der betriebsfähig entlang des einen von dem ersten Endelement (202; 334) und dem zweiten Endelement (204; 336) relativ zu der Zieloberfläche (284; 390; 504) angeordnet ist;
einen Referenzphotonendetektor (514), der betreibbar ist, um Photonen zu erfassen, die mittels einer internen Reflexion (IRF) empfangen werden; und,
einen Prozessor (518), der kommunikativ mit der Photonenquelle (272; 382; 506) und dem Photonenrezeptor (274; 384; 510) gekoppelt ist;
wobei die Photonenquelle (272; 382; 506) betreibbar ist, um Photonen durch zumindest einen Abschnitt der Federkammer (208; 340) auf die Zieloberfläche (284; 390; 504) zu richten, wobei der Photonenrezeptor (274; 384; 510) betreibbar ist, um beim Empfangen von Photonen, die von der Zieloberfläche (284; 390; 504) reflektiert werden (RFL), von der Photonenquelle (272; 382; 506) ein Signal zu erzeugen, und einen Sard-Prozessor (518), der betreibbar ist, um eine Entfernung zu bestimmen, die eine Beziehung zu einer Laufzeit von Photonen aufweist, die von der Zieloberfläche (284; 390; 504) von der Photonenquelle (272; 382; 506) reflektiert und an dem Photonenrezeptor (274; 384; 510) empfangen werden.

2. Gasfederanordnung (102; 200; 304) nach Anspruch 1, ferner umfassend eine Linse (508), die optisch mit der Photonenquelle (272; 382; 506) gekoppelt ist und durch die emittierte Photonen (EMT) auf die Zieloberfläche (284; 390; 504) gerichtet werden.

3. Gasfederanordnung (102; 200; 304) nach einem der Ansprüche 1 und 2, wobei die Laserdiode in Form eines oberflächenemittierenden Lasers mit vertikaler Kavität vorliegt.

4. Gasfederanordnung (102; 200; 304) nach einem der Ansprüche 1-3, wobei die Photonenquelle (272; 382; 506) Photonen (EMT) mit einer Wellenlänge innerhalb eines Bereichs von etwa 650 nm bis etwa 2000 nm emittiert.

5. Gasfederanordnung (102; 200; 304) nach einem der Ansprüche 1-4, wobei der Photonenrezeptor (274; 384; 510) ein Einzelphotonenlawinendioden-Array (SPAD-Array) einschließt.

6. Gasfederanordnung (102; 200; 304) nach einem der Ansprüche 1-5, wobei die Zieloberfläche (284; 390; 504) einen Reflexionsgrad von nur etwa drei (3) Prozent aufweist.

7. Gasfederanordnung (102; 200; 304) nach einem der Ansprüche 1-6, wobei die Zieloberfläche (284; 390; 504) zumindest teilweise aus einem Material mit einem Reflexionsgrad von mindestens dreißig (30) Prozent gebildet ist.

8. Gasfederanordnung (102; 200; 304) nach einem der Ansprüche 1-7, wobei die Zieloberfläche (284; 390; 504) zumindest teilweise aus einem Material gebildet ist, das eines von diffusem Reflexionsgrad, spiegelndem Reflexionsgrad und retroreflektierendem Reflexionsgrad aufweist.

9. Gasfederanordnung (102; 200; 304) nach einem der Ansprüche 1-8, ferner umfassend eine Sensoranordnung (126; 268; 376; 500), die auf einem von dem ersten Endelement (202; 334) und dem zweiten Endelement (204; 336) getragen wird, wobei die Sensoranordnung (126; 268; 376; 500) die Photonenquelle (272; 382; 506) und den Photonenrezeptor (274; 384; 510) einschließt.

10. Gasfederanordnung (102; 200; 304) nach Anspruch 9, wobei die Sensoranordnung (126; 268; 376; 500) einen Umgebungslichtsensor (530) einschließt, der kommunikativ mit mindestens einer von der Photonenquelle (272; 382; 506) und dem Photonenrezeptor (274; 384; 510) gekoppelt ist.

11. Gasfederanordnung (102; 200; 304) nach einem der Ansprüche 1-10, wobei die Zieloberfläche (284; 390; 504) quer zur Längsachse (AX) ausgerichtet ist und entlang des ersten Endelements (202; 334) getragen wird, und die Photonenquelle (272; 382; 506) und der Photonenrezeptor (274; 384; 510) entlang des zweiten Endelements (204; 336) getragen werden, so dass Photonen in einer etwa longitudinalen Richtung emittiert (EMT) und reflektiert (RFL) werden.

12. Gasfederanordnung (102; 200; 304) nach Anspruch 11, wobei das erste Endelement (334) eine Endelementwand (346) mit einem sich dadurch erstreckenden Durchgang einschließt, der quer zu der Längsachse (AX) ausgerichtet ist, und sich die Sensoranordnung (376) durch den Durchgang in Fluidverbindung mit der Federkammer (340) erstreckt.

13. Gasfederanordnung (102; 200; 304) nach Anspruch 12, ferner umfassend ein Dichtungselement (380), das fluidisch zwischen der Endelementwand (346) und der Sensoranordnung (376) angeordnet ist, so dass eine im Wesentlichen fluiddichte Dichtung dazwischen gebildet ist.

14. Aufhängungssystem (100), umfassend:
ein Druckgassystem (104) einschließlich einer Druckgasquelle (106; 116) und einer Steuervorrichtung (108); und,
mindestens eine Gasfederanordnung (102; 200; 304) nach einem der Ansprüche 1-13, die in Fluidverbindung mit der Druckgasquelle (106; 116) durch die Steuervorrichtung (110) angeordnet ist, sodass Druckgas wahlweise in die und aus der Federkammer (208; 340) übertragen werden kann.

15. Gasfeder- und Dämpferanordnung (300), umfassend:
eine Dämpferanordnung (302); und,
eine Gasfederanordnung (102; 200; 304) nach einem der Ansprüche 1-13, die wirksam mit der Dämpferanordnung (302) verbunden ist.

## Revendications

1. Ensemble ressort à gaz (102 ;200 ;304) ayant un axe longitudinal (AX), ledit ensemble ressort à gaz (102 ;200 ;304) comprenant :
un élément ressort flexible (206 ;338) incluant une paroi flexible s'étendant de façon périphérique autour dudit axe longitudinal (AX) et axialement entre des première et deuxième extrémités opposées (218 ;348, 228 ;358) dudit élément ressort flexible (206 ;338) pour définir au moins partiellement une chambre de ressort (208 ;340) entre elles ;
un premier élément d'extrémité (202 ;334) fixé le long de ladite première extrémité (218 ;348) dudit élément ressort flexible (206 ;338) de telle sorte qu'un joint essentiellement étanche aux fluides est formé entre eux ;
un deuxième élément d'extrémité (204 ;336) disposé dans une relation espacée axialement par rapport audit premier élément d'extrémité (202 ;334), ledit deuxième élément d'extrémité (204 ;336) fixé le long de ladite deuxième extrémité (228 ;358) dudit élément ressort flexible (206 ;338) de telle sorte qu'un joint essentiellement étanche aux fluides est formé entre eux ;
une source de photons (272 ;382 ;506) incluant une diode laser, ladite source de photons (272 ;382 ;506) opérationnellement disposée le long d'un dudit premier élément d'extrémité (202 ;334) et dudit deuxième élément d'extrémité (204 ;336) ;
une surface cible (284 ;390 ;504) opérationnellement disposée le long de l'autre dudit premier élément d'extrémité (202 ;334) et dudit deuxième élément d'extrémité (204 ;336) ;
un récepteur de photons (274 ;384 ;510) opérationnellement disposé le long dudit un dudit premier élément d'extrémité (202 ;334) et dudit deuxième élément d'extrémité (204 ;336) par rapport à ladite surface cible (284 ;390 ;504) ;
un détecteur de photons de référence (514) opérationnel pour détecter des photons reçus au moyen d'une réflexion interne (IRF) ; et,
un processeur (518) couplé par communications avec ladite source de photons (272 ;382 ;506) et ledit récepteur de photons (274 ;384 ;510) ;
ladite source de photons (272 ;382 ;506) opérationnelle pour diriger des photons vers (EMT) ladite surface cible (284 ;390 ;504) à travers au moins une partie de ladite chambre de ressort (208 ;340), ledit récepteur de photons (274 ;384 ;510) opérationnel pour générer un signal à la réception de photons réfléchis par (RFL) ladite surface cible (284 ;390 ;504) provenant de ladite source de photons (272 ;382 ;506), et ledit processeur (518) opérationnel pour déterminer une distance ayant une relation avec un temps de vol de photons réfléchis par (RFL) ladite surface cible (284 ;390 ;504) provenant de ladite source de photons (272 ;382 ;506) et reçus au niveau dudit récepteur de photons (274 ;384 ;510).

2. Ensemble ressort à gaz (102 ;200 ;304) selon la revendication 1 comprenant en outre une lentille (508) couplée optiquement à ladite source de photons (272 ;382 ;506) et à travers laquelle des photons émis (EMT) sont dirigés vers ladite surface cible (284 ;390 ;504).

3. Ensemble ressort à gaz (102 ;200 ;304) selon l'une ou l'autre des revendications 1 et 2, dans lequel ladite diode laser est sous la forme d'un laser à émission de surface de cavité verticale.

4. Ensemble ressort à gaz (102 ;200 ;304) selon l'une quelconque des revendications 1 à 3, dans lequel ladite source de photons (272 ;382 ;506) émet des photons (EMT) ayant une longueur d'onde dans une plage allant d'approximativement 650 nm à approximativement 2000 nm.

5. Ensemble ressort à gaz (102 ;200 ;304) selon l'une quelconque des revendications 1 à 4, dans lequel ledit récepteur de photons (274 ;384 ;510) inclut un réseau de diodes à avalanche à photon unique (SPAD).

6. Ensemble ressort à gaz (102 ;200 ;304) selon l'une quelconque des revendications 1 à 5, dans lequel ladite surface cible (284 ;390 ;504) a une réflectance aussi basse qu'approximativement trois (3) pour cent.

7. Ensemble ressort à gaz (102 ;200 ;304) selon l'une quelconque des revendications 1 à 6, dans lequel ladite surface cible (284 ;390 ;504) est au moins partiellement formée par un matériau ayant une réflectance d'au moins trente (30) pour cent.

8. Ensemble ressort à gaz (102 ;200 ;304) selon l'une quelconque des revendications 1 à 7, dans lequel ladite surface cible (284 ;390 ;504) est au moins partiellement formée par un matériau ayant une d'une réflectance diffuse, d'une réflexion spéculaire et d'une rétroréflectance.

9. Ensemble ressort à gaz (102 ;200 ;304) selon l'une quelconque des revendications 1 à 8 comprenant en outre un ensemble capteur (126 ;268 ;376 ;500) supporté sur un dudit premier élément d'extrémité (202 ;334) et dudit deuxième élément d'extrémité (204 ;336), ledit ensemble capteur (126 ;268 ;376 ;500) incluant ladite source de photons (272 ;382 ;506) et ledit récepteur de photons (274 ;384 ;510).

10. Ensemble ressort à gaz (102 ;200 ;304) selon la revendication 9, dans lequel ledit ensemble capteur (126 ;268 ;376 ;500) inclut un capteur de lumière ambiante (530) couplé par communications avec au moins un de ladite source de photons (272 ;382 ;506) et dudit récepteur de photons (274 ;384 ;510).

11. Ensemble ressort à gaz (102 ;200 ;304) selon l'une quelconque des revendications 1 à 10, dans lequel ladite surface cible (284 ;390 ;504) est orientée transversale audit axe longitudinal (AX) et supportée le long dudit premier élément d'extrémité (202 ;334), et ladite source de photons (272 ;382 ;506) et ledit récepteur de photons (274 ;384 ;510) sont supportés le long dudit deuxième élément d'extrémité (204 ;336) de telle sorte que des photons sont émis (EMT) et réfléchis (RFL) dans une direction approximativement longitudinale.

12. Ensemble ressort à gaz (102 ;200 ;304) selon la revendication 11 dans lequel ledit premier élément d'extrémité (334) inclut une paroi d'élément d'extrémité (346) avec un passage s'étendant à travers celle-ci qui est orienté transversal audit axe longitudinal (AX), et ledit ensemble capteur (376) s'étend en communication fluidique avec ladite chambre de ressort (340) à travers ledit passage.

13. Ensemble ressort à gaz (102 ;200 ;304) selon la revendication 12 comprenant en outre un élément d'étanchéité (380) disposé fluidiquement entre ladite paroi d'élément d'extrémité (346) et ledit ensemble capteur (376) de telle sorte qu'un joint essentiellement étanche aux fluides est formé entre eux.

14. Système de suspension (100) comprenant :
un système de gaz sous pression (104) incluant une source de gaz sous pression (106 ; 116) et un dispositif de commande (108) ; et,
au moins un ensemble ressort à gaz (102 ;200 ;304) selon l'une quelconque des revendications 1 à 13 disposé en communication fluidique avec ladite source de gaz sous pression (106 ; 116) par l'intermédiaire dudit dispositif de commande (110) de telle sorte que du gaz sous pression peut être sélectivement transféré vers l'intérieur et l'extérieur d'au moins ladite chambre de ressort (208 ;340).

15. Ensemble ressort et amortisseur à gaz (300) comprenant :
un ensemble amortisseur (302) ; et,
un ensemble ressort à gaz (102 ;200 ;304) selon l'une quelconque des revendications 1 à 13 relié opérationnellement audit ensemble amortisseur (302).
